# FASCICULE DE BREVET EUROPEEN

(11) **EP 2 883 762 B1**
(45) Date de publication et mention de la délivrance du brevet: **10.06.2020**
(21) Numéro de dépôt: 14195966.8
(22) Date de dépôt: 02.12.2014
(51) Int. Cl.: B60S 1/38

(54) **Balai d'essuie-glace pour un système d'essuyage d'une vitre de véhicule et son procédé d'assemblage**
Scheibenwischerblatt für ein Reinigungssystem einer Fahrzeugscheibe, und sein Zusammenbauverfahren
Windscreen-wiper blade for a windscreen-wiper system of a vehicle and method for assembling same

(30) Priorité: 16.12.2013 FR 1362732
(43) Date de publication de la demande: 17.06.2015
(73) Titulaire: Valeo Systèmes d'Essuyage, 78322 Le Mesnil Saint Denis (FR)
(72) Inventeur: Caillot, Gérald, 78720 Cernay la Ville (FR)
(74) Mandataire: Valeo Systèmes d'Essuyage

(56) Documents cités:
- EP-A2- 2 127 969
- DE-A1- 10 025 630
- DE-A1-102011 088 871
- FR-A1- 2 942 186
- FR-A1- 2 979 874

## Description

### DOMAINE TECHNIQUE

La présente invention concerne un balai d'essuie-glace pour un système d'essuyage d'une vitre de véhicule, en particulier automobile, un système d'essuyage d'une vitre de véhicule, ainsi qu'un procédé d'assemblage d'un balai d'essuie-glace de véhicule.

### ETAT DE L'ART

Typiquement, un balai d'essuie-glace pour un système d'essuyage d'une vitre de véhicule automobile comprend un corps longitudinal portant une lame d'essuyage, en général en caoutchouc, destinée à frotter contre le pare-brise du véhicule pour évacuer de l'eau en l'amenant en dehors du champ de vision du conducteur. Le balai comporte en outre au moins un élément de support allongé élastique en forme de bande, aussi appelé vertèbre de rigidification, qui confère éventuellement un cintrage à la lame d'essuyage, de manière à favoriser l'application de cette lame sur le pare-brise.

Le balai est porté par un bras qui est entraîné par un moteur dans un mouvement de va-et-vient angulaire. Les moyens de liaison du balai au bras comprennent en général un connecteur qui est solidaire du corps et un adaptateur qui est articulé sur le corps et fixé à une extrémité du bras. Dans le cas où le corps est réalisé en deux parties indépendantes, ces deux parties sont rendues solidaires l'une de l'autre par l'intermédiaire du connecteur qui est intercalé entre ces deux parties.

On a déjà proposé de former le corps et la lame d'essuyage du balai en une seule pièce pour simplifier la fabrication du balai. Le document FR2 942 186 A1 montre un tel balai. Le corps comporte alors une cavité de réception d'une vertèbre longitudinale de cintrage. Cependant, on a constaté que ce type de balai de la technique antérieure n'assure en général pas un essuyage efficace du pare-brise car la lame d'essuyage n'est pas maintenue efficacement. En effet, un jeu résiduel peut exister entre la vertèbre et le corps, ce qui favorise des déplacements de la lame par rapport à la vertèbre en utilisation, et en particulier des déplacements vers l'avant ou vers l'arrière de la lame lors de l'essuyage du pare-brise, la lame pouvant alors tourner autour de la vertèbre. L'angle de calage de la lame sur le pare-brise n'est alors plus maîtrisable, ce qui diminue de manière significative l'efficacité de l'essuyage.

L'invention propose une solution simple, efficace et économique à ce problème.

### EXPOSE DE L'INVENTION

L'invention propose un balai d'essuie-glace pour un système d'essuyage d'une vitre de véhicule, en particulier automobile, comprenant un corps longitudinal et une lame d'essuyage formés d'une seule pièce, ladite pièce comprenant une cavité de réception d'un élément de support allongé élastique en forme de bande, caractérisé en ce que l'élément de support allongé élastique en forme de bande est logé dans un évidement d'un organe longitudinal de maintien de la lame d'essuyage, cet organe de maintien étant logé dans ladite cavité et en ce que l'organe de maintien, l'élément de support et le corps longitudinal ont sensiblement la même longueur.

De préférence, ledit corps longitudinal comprend ladite cavité.

L'invention permet d'assurer le maintien de la lame d'essuyage au moyen d'un organe qui est logé dans la cavité du corps de réception de l'élément de support, et d'éviter ainsi les inconvénients de la technique antérieure.

Le corps longitudinal du balai peut être formé d'une seule pièce avec un déflecteur aérodynamique longitudinal qui est en général destiné à améliorer le fonctionnement du système en assurant le plaquage du balai sur le pare brise et donc la performance aérodynamique du système.

La cavité du corps longitudinal est de préférence configurée pour recevoir l'organe de maintien par coulissement longitudinal, ce qui facilite l'assemblage du balai selon l'invention.

L'évidement est de préférence configuré pour recevoir l'élément de support par coulissement longitudinal, ce qui facilite l'assemblage du balai.

Selon un mode particulier de réalisation de l'invention, la lame d'essuyage est reliée à un talon longitudinal qui s'étend dans ladite cavité. Ce talon a par exemple en section une forme sensiblement en T.

Avantageusement, l'organe de maintien comprend un logement de réception dudit talon. La lame d'essuyage est ainsi maintenue en position par l'intermédiaire de son talon. L'organe de maintien limite ainsi les déplacements de la lame autour de l'axe longitudinal du balai.

Le logement de l'organe de maintien peut être défini par deux crochets latéraux longitudinaux de l'organe de maintien. Ces crochets ont par exemple en section une forme sensiblement en L. Ils peuvent être sensiblement symétriques par rapport à un plan longitudinal médian du balai.

L'élément de support peut s'étendre au-dessus du talon.

Le balai selon l'invention peut comprendre au moins un élément longitudinal de chauffage dans le corps longitudinal. Cet élément de chauffage est par exemple un fil chauffant, un film chauffant ou une peinture résistive.

Le corps longitudinal du balai peut comprendre au moins un conduit interne de circulation de fluide, tel qu'un liquide lave glace. La ou chaque paroi définissant ce type de conduit est avantageusement formée d'une seule pièce avec le corps longitudinal. Chacun de ces conduits peut s'étendre en dehors de la cavité précitée de réception de l'élément de support.

Le corps longitudinal du balai peut être mono- ou bi-matière. Dans le cas où il comprend deux matériaux différents, ceux-ci ont de préférence des duretés différentes. Le matériau de la lame ou de la partie de la lame assurant la fonction d'essuyage a de préférence une dureté Shore A comprise entre 61 et 72 environ. Le matériau d'au moins une partie du reste du corps longitudinal, telle que sa partie supérieure avec le déflecteur aérodynamique, a de préférence une dureté supérieure à celle de la lame (pour éviter un affaissement du corps longitudinal, faciliter sa fabrication et le montage des pièces, etc.), et qui est par exemple comprise entre 70 et 83 Shore A, et est de préférence de 83.

Le balai selon l'invention peut comprendre un connecteur de liaison à un bras porte-balai, ce connecteur étant monté dans une découpe médiane du corps longitudinal et traversé par l'élément de support qui assure la retenue du connecteur vis-à-vis du corps longitudinal et de l'organe de maintien.

Avantageusement, la découpe a une dimension longitudinale (entre deux faces transversales en regard du corps longitudinal) qui est sensiblement égale ou légèrement supérieure à celle du connecteur de façon à ce que ce dernier puisse venir en butée sur les faces en regard précitées. Ainsi, les déplacements relatifs en direction longitudinale du corps longitudinal et du connecteur sont relativement limités, ce qui assure un maintien de la lame par rapport au connecteur, en direction longitudinale.

L'organe de maintien peut comprendre des fentes débouchant dans ladite cavité et dans lesquelles sont engagées des parties du connecteur, lesdites parties comprenant des encoches de réception de l'élément de support, en particulier par coulissement longitudinal. Dans un cas particulier de réalisation de l'invention, le connecteur comprend des tétons qui passent à travers des découpes de l'organe de maintien, puis viennent se bloquer dans des encoches de l'élément de support. L'élément de support assure ainsi la retenue du connecteur vis-à-vis du corps longitudinal et de l'organe de maintien.

La présente invention concerne également un système d'essuyage d'une vitre de véhicule, en particulier automobile, comprenant au moins un balai selon l'une quelconque des définitions ci-dessus.

La présente invention concerne encore un procédé d'assemblage d'un balai d'essuie-glace pour un système d'essuyage d'une vitre de véhicule, en particulier automobile, ce balai comprenant un corps longitudinal et une lame d'essuyage formés d'une seule pièce, ladite pièce comprenant une cavité de réception d'un élément de support allongé élastique en forme de bande, caractérisé en ce qu'il comprend les étapes consistant à :
a) insérer par coulissement un organe longitudinal de maintien de la lame d'essuyage, dans la cavité du corps longitudinal, et
b) insérer l'élément de support dans un évidement dudit organe de maintien, et en ce que l'organe de maintien (132), l'élément de support (118) et le corps longitudinal (114) ont sensiblement la même longueur.

De préférence, ledit corps longitudinal comprend ladite cavité.

Le procédé selon l'invention peut comprendre une ou plusieurs des étapes suivantes :
- entre les étapes a) et b), une étape c) consistant à monter un connecteur de liaison à un bras porte-balai, dans une découpe médiane du corps longitudinal, ce connecteur étant destiné à être traversé par l'élément de support lors de l'étape b), ou, après l'étape b), une étape c) consistant à monter un connecteur de liaison à un bras porte-balai, dans une découpe médiane du corps longitudinal, ce connecteur étant formé d'au moins deux parties qui sont assemblées et montées sur l'organe de maintien et l'élément de support,
- avant l'étape a), une étape d) consistant à réaliser ladite découpe médiane du corps longitudinal,
- avant l'étape d), une étape consistant à réaliser le corps longitudinal par extrusion, au moins un élément longitudinal de chauffage étant éventuellement co-extrudé avec le corps longitudinal,
- après l'étape b), une étape de montage d'embouts aux extrémités longitudinales du corps longitudinal,
- après l'étape b), une étape de montage d'un adaptateur sur le connecteur,
- une étape d'insertion d'au moins un élément longitudinal de chauffage dans au moins un canal longitudinal du corps, et
- une étape de raccordement d'au moins un conduit interne de circulation de fluide du corps longitudinal, à des moyens d'alimentation en fluide.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue en perspective éclatée d'un système d'essuyage selon l'art antérieur,
- la figure 2 est une vue schématique en coupe d'un balai d'essuie-glace selon l'invention,
- la figure 3 est une vue schématique en coupe du corps longitudinal du balai de la figure 2,
- la figure 4 est une autre vue schématique en coupe du balai de la figure 2, la coupe étant réalisée au niveau du connecteur de ce balai,
- les figures 5 à 10 sont des vues schématiques en perspective du balai de la figure 2 et représentent des étapes d'un procédé d'assemblage selon l'invention, la figure 8 étant une vue à plus grande échelle du détail I₈ de la figure 7,
- la figure 11 est une vue schématique en coupe d'une variante de réalisation du balai d'essuie-glace selon l'invention,
- la figure 12 est une vue schématique en coupe d'une autre variante de réalisation du balai d'essuie-glace selon l'invention, et
- les figures 13 et 14 sont des vues schématiques partielles et en perspective d'un organe de maintien et d'un connecteur selon deux autres variantes de réalisation du balai d'essuie-glace selon l'invention, respectivement.

### DESCRIPTION DETAILLEE

Il faut noter que les figures exposent l'invention de manière détaillée pour mettre en œuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur le bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

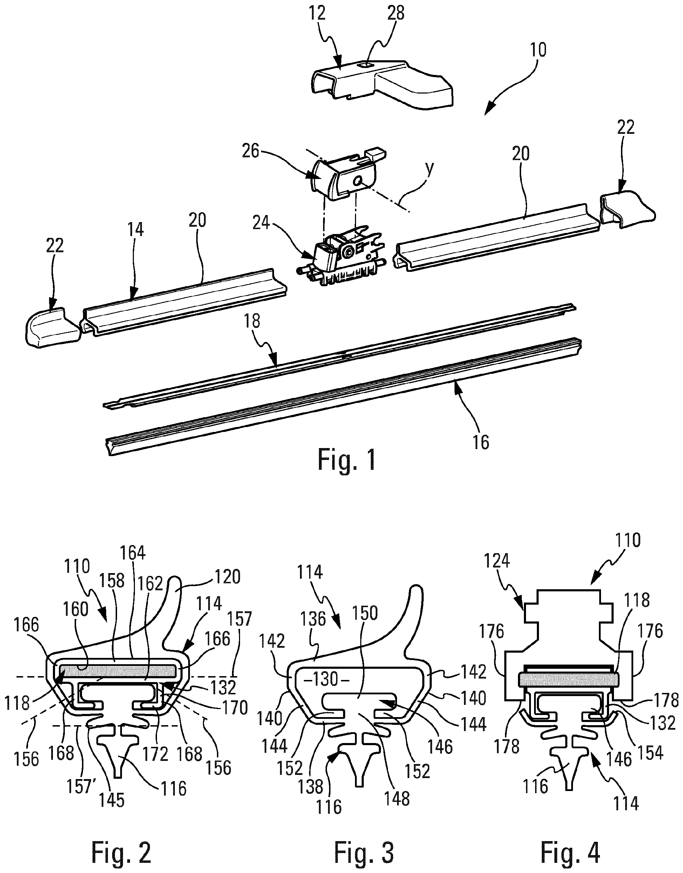

Il est illustré à la figure 1 un système selon l'art antérieur d'essuyage de pare-brise d'un véhicule, en particulier automobile. Ce système comprend un balai 10 d'essuie-glace du pare-brise et un bras 12 porte-balai qui est partiellement représenté et destiné à être entraîné par un moteur pour suivre un mouvement angulaire de va-et-vient permettant d'évacuer l'eau et éventuellement d'autres éléments indésirables recouvrant le pare-brise.

Le balai 10 comprend ici un corps longitudinal 14, une lame d'essuyage 16, en général en caoutchouc, et au moins un élément de support 18 de manière à favoriser l'application de la lame 16 sur la vitre du véhicule.

Le corps 14 du balai 10 comporte un déflecteur aérodynamique supérieur 20 destiné à améliorer le fonctionnement du système d'essuyage, le but de ce déflecteur aérodynamique 20 étant d'améliorer le plaquage du balai sur le pare-brise et donc la performance aérodynamique du système.

Le balai 10 comprend en outre des embouts ou agrafes d'accrochage 22 de la lame 16 et de l'élément de support 18 sur le corps, ces embouts 22 étant situés à chacune des extrémités longitudinales du corps 14.

Le corps longitudinal 14 du balai est ici réalisé en deux parties indépendantes qui sont disposées sensiblement bout à bout et raccordées l'une à l'autre par un connecteur 24 intermédiaire. Ce connecteur 24 est donc intercalé entre les deux parties du corps longitudinal 14 et comprend des moyens de fixation à ces parties, tels que des canules.

Pour assurer son montage sur le bras 12, le balai 10 comprend un adaptateur 26 monté sur le connecteur 24 et permettant une articulation du balai 10 par rapport au bras 12. L'articulation du balai 10 par rapport au bras 12 est une articulation selon un mouvement de rotation autour d'un axe de rotation Y perpendiculaire à l'axe longitudinal du balai 10. Le balai 10 doit en effet présenter au moins un degré de liberté en rotation par rapport au bras 12, et plus spécifiquement par rapport à une pièce terminale 28 du bras 12, pour permettre au balai 10 de suivre la courbure du pare-brise.

L'invention concerne un type particulier de balai d'essuie-glace selon lequel le corps longitudinal 14 est formé d'une seule pièce avec la lame 16, voire également avec le déflecteur aérodynamique 20, ce corps longitudinal comprenant une cavité de réception d'un élément de support 18. L'invention propose une solution au problème de la technique antérieure de maintien efficace de la lame 16 pour ce type de balai, au moyen d'un organe de maintien de la lame qui est logé dans la cavité précitée et comprend un évidement de logement de l'élément de support.

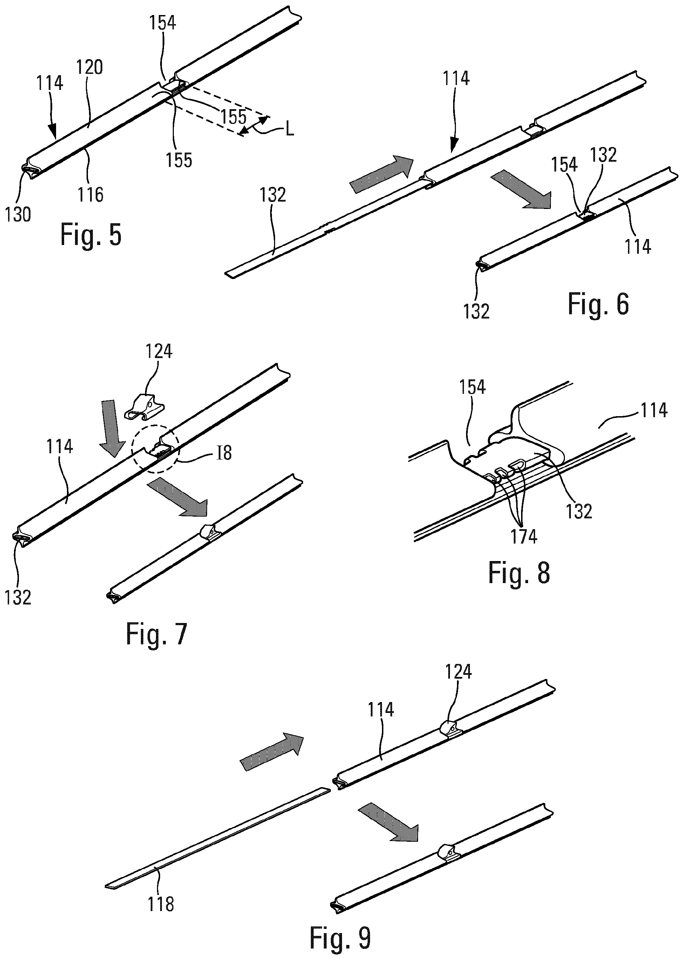

Les figures 2 à 4 représentent un mode de réalisation du balai d'essuie-glace 110 selon l'invention et les figures 5 à 10 représentent des étapes d'assemblage de ce balai 110.

Les éléments déjà décrits dans ce qui précède sont désignés dans ce qui suit par les mêmes chiffres de référence augmentés d'une centaine. Ainsi, les références 114, 116, 118, 120, 122, 124 et 126 désignent respectivement le corps longitudinal, la lame d'essuyage, l'élément de support, le déflecteur aérodynamique, les embouts d'extrémités, le connecteur, et l'adaptateur du balai 110 selon l'invention.

Comme cela est visible en figure 2, le corps longitudinal 114, la lame 116 et le déflecteur aérodynamique 120 du balai 110 sont formés d'une seule pièce, de préférence par extrusion ou injection, et par exemple en caoutchouc.

Le corps longitudinal 114 définit une cavité interne 130 longitudinale de réception de l'élément de support 118 et de logement d'un organe 132 de maintien de la lame 116. La cavité 130 débouche à chacune des extrémités longitudinales du corps longitudinal 114.

La partie du corps longitudinal 114 définissant la cavité 130 comprend deux parois, respectivement supérieure 136 et inférieure 138, sensiblement parallèles, et deux parois latérales 140, respectivement avant et arrière.

Le déflecteur aérodynamique 120 s'étend vers le haut depuis la paroi supérieure 136, et la lame 116 s'étend vers le bas depuis la paroi inférieure 138.

La paroi supérieure 136 a ici une largeur supérieure à celle de la paroi inférieure 138 et est espacée de celle-ci. En variante, l'inverse serait possible, notamment si on veut travailler la partie avant du balai (face au flux d'air) pour améliorer sa performance aérodynamique par exemple.

Chaque paroi latérale 140 comprend une première partie supérieure 142 dont le bord longitudinal supérieur est relié à un bord longitudinal latéral de la paroi supérieure 136, cette partie supérieure 142 étant sensiblement perpendiculaire à la paroi supérieure 136. Le bord longitudinal inférieur de la partie 142 est relié au bord longitudinal supérieur d'une seconde partie inférieure 144 de la paroi latérale, qui est inclinée et dont le bord longitudinal inférieur est relié à un bord longitudinal latéral de la paroi inférieure 138.

La lame 116 est par exemple en forme du type sapin, bien connu de l'homme du métier. Son extrémité supérieure est reliée par une charnière à un organe d'amortissement 145 et à un talon longitudinal 146, qui sont formés d'une seule pièce avec le corps longitudinal 114. De façon connue, en fonctionnement, la lame 116 peut venir en butée sur l'organe 145 qui amortit son retournement vers l'avant ou vers l'arrière. Dans l'exemple représenté, l'organe 145 est situé à l'extérieur de la cavité 130, et le talon 146 est situé dans la cavité 130 du corps longitudinal 114 et s'étend vers le haut depuis la paroi inférieure 138 du corps longitudinal 114.

Le talon 146 a ici une section sensiblement en forme de T dont l'extrémité inférieure de la branche verticale 148 est reliée à la paroi inférieure 138. La branche horizontale 150 du T s'étend à distance de la paroi inférieure 138 et définit avec celle-ci des espaces longitudinaux latéraux 152.

Comme cela est visible aux figures 4 et 5-8, une découpe 154 est réalisée dans le corps longitudinal 114, sensiblement en son milieu, pour le montage du connecteur 124. La découpe 154 du corps longitudinal 114 peut comprendre deux découpes de la paroi inférieure 138 ou des parois latérales 140 du corps longitudinal 114 dans deux plans longitudinaux 156 situés de part et d'autre de la lame 116, comme cela est schématiquement représenté en figure 2 par des traits pointillés inclinés, ainsi que deux découpes des parois supérieure 136 et latérales 140 du corps longitudinal 114 dans deux plans transversaux parallèles entre eux et au plan du dessin de la figure 2. Cette découpe 154 du corps longitudinal 114 entraîne la suppression d'une partie médiane de la cavité 130 et la séparation de la partie supérieure du corps longitudinal 114 en deux parties adjacentes, qui sont reliées l'une à l'autre par la partie inférieure du corps longitudinal 114 à savoir la lame 116. La découpe 154 forme également sur le corps longitudinal 114 deux faces transversales 155 en regard, qui délimitent longitudinalement cette découpe (figure 5). Les parties de la cavité 130 sont débouchantes à leurs extrémités longitudinales, et donc sur les faces transversales 155.

Le corps longitudinal 114 peut être réalisé d'une seule pièce en un matériau (pour réduire le coût et faciliter sa fabrication) ou en deux matériaux (par exemple par co-extrusion). Dans le cas où il est bi-matière, la figure 2 montre deux zones possibles de liaison d'un premier matériau à un second matériau, qui sont schématiquement représentées par des traits pointillés horizontaux. La première zone 157 est située au niveau des parois latérales 140 du corps longitudinal 114 et la seconde zone 157' est située au niveau de la charnière de la lame 116. Le matériau de la partie du corps longitudinal 114 située sous les traits pointillés est de préférence moins dur que celui de la partie du corps longitudinal 114 située au-dessus de ces traits.

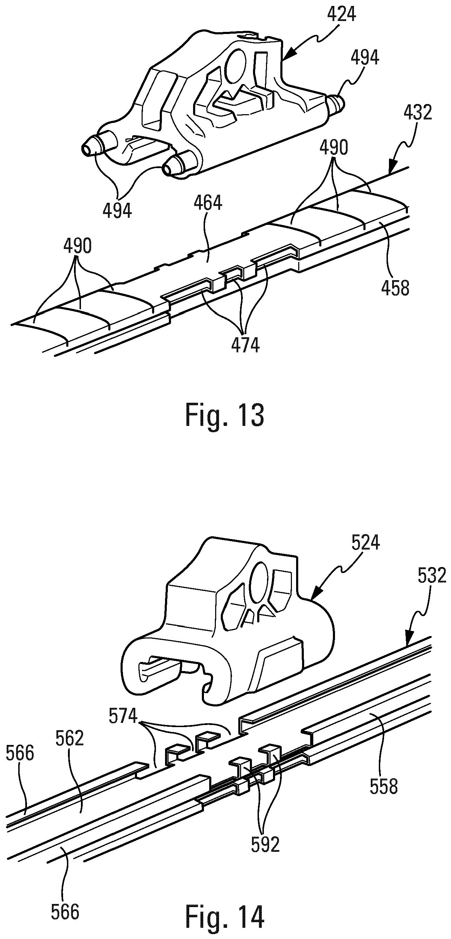

L'organe de maintien 132 est destiné à être inséré par coulissement dans la cavité 130 et est donc configuré, et en particulier dimensionné, pour autoriser ce montage. L'organe 132 comprend une barre 158 de forme allongée qui comprend un évidement longitudinal interne 160 de logement de l'élément de support 118, qui est également destiné à être inséré dans cet évidement par coulissement. Comme cela sera décrit plus en détail dans ce qui suit en référence à la figure 14, la barre 158 peut être ouverte au moins partiellement sur sa partie supérieure.

La barre 158 de l'organe 132 comprend deux parois sensiblement parallèles, respectivement inférieure 162 et supérieure 164, reliées entre elles par des parois latérales 166. Les parois 162 à 166 définissent entre elles l'évidement 160 précité qui a des dimensions légèrement supérieures à celles de l'élément de support 118 pour autoriser le montage de cette dernière dans l'évidement 160.

L'organe 132 comprend en outre des crochets longitudinaux inférieurs 168 qui sont formés d'une seule pièce avec la barre 158 et qui sont destinés à coopérer avec le talon 146 pour assurer un maintien de la lame 116. Les crochets 168 sont au nombre de deux et s'étendent de part et d'autre du talon 146. Ils ont chacun en section une forme sensiblement en L et s'étendent vers le bas depuis la paroi inférieure 162 de la barre 158.

Chaque crochet 168 comprend une première partie supérieure 170 dont le bord longitudinal supérieur est relié à la paroi inférieure 162, cette partie supérieure 170 étant sensiblement perpendiculaire à la paroi 162. Le bord longitudinal inférieur de la partie 170 est relié au bord longitudinal latéral d'une seconde partie inférieure 172 du crochet, qui est configurée pour être insérée dans un des espaces 152 précités et donc intercalée entre une partie du talon 146 et la paroi inférieure 138 du corps longitudinal 114.

Les dimensions de la cavité 130 sont ici prévues pour autoriser le montage de l'organe 132 par coulissement. En particulier, la largeur maximale de l'organe 132 est inférieure à celle de la cavité 130, l'épaisseur de la barre 158 est inférieure à la distance entre l'extrémité supérieure du talon 146 et la paroi supérieure 136 du corps longitudinal 114, la distance entre les parties supérieures 170 des crochets 168 est supérieure à la largeur maximale du talon 146, la distance entre les parties inférieures 172 des crochets 168 est supérieure à la largeur minimale du talon 146, l'épaisseur de ces parties inférieures 172 est supérieure à celle des espaces 152, etc.

L'organe 132 peut être réalisé en matériau plastique ou métallique et l'élément de support 118 est de préférence réalisé en métal. L'organe 132 et l'élément de support 118 ont sensiblement la même longueur qui est similaire à celle du corps longitudinal 114.

L'organe 132 n'est pas découpé et traverse donc la découpe 154. Il comprend, sensiblement en son milieu, c'est-à-dire au niveau de la découpe 154, des fentes 174 verticales de montage du connecteur (figures 4 et 6). Des fentes 174 sont formés de chaque côté de l'organe 132 et traversent verticalement les parois latérales 166 et des parties d'extrémité latérales des parois 162, 164, en débouchant dans la cavité 130. Elles sont par exemple au nombre de deux ou trois de chaque côté de l'organe 132.

Comme cela est visible en figure 4, le connecteur 124 est monté sur la barre 158 de l'organe 132 de façon à la coiffer, et comprend des parties ou jambes 176 latérales s'étendant de part et d'autre de cette barre. Chacune de ces jambes 176 comprend sur son flanc latéral orienté vers l'autre jambe, des ergots 178 destinés à être engagés dans les fentes 174 de l'organe. Comme cela est visible en figure 4, ces ergots comprennent des encoches longitudinales de passage de l'élément de support 118. Le montage par coulissement longitudinal de l'élément de support 118 dans les encoches des jambes 176 du connecteur 124 assure la retenue de ce dernier vis-à-vis de l'organe 132 et du corps longitudinal 114 du balai.

On se réfère désormais aux figures 5 à 10 qui représentent des étapes d'un mode de réalisation du procédé selon l'invention.

Selon une première étape représentée en figure 5, la découpe 154 est réalisée sensiblement au milieu du corps longitudinal 114 du balai, en vue de l'insertion du connecteur 124 dans cette découpe. Les dimensions de cette découpe sont donc fonction de celles du connecteur. En particulier, la découpe 154 a une longueur ou dimension longitudinale L sensiblement égale voire légèrement supérieure à celle du connecteur 124.

L'étape suivante représentée en figure 6 consiste à insérer l'organe de maintien 132 dans la cavité 130 du corps longitudinal 114, la barre 158 de l'organe 132 étant insérée au-dessus du talon 146, entre celui-ci et la paroi supérieure 136 du corps longitudinal 114, et les crochets 168 coulissant de chaque côté du talon 146 avec leurs parties inférieures 172 insérées dans les espaces 152 précités.

L'étape suivante représentée aux figures 7 et 8 consiste à monter le connecteur 124 dans la découpe 154 du corps longitudinal 114 et sur l'organe de maintien 132, en insérant les ergots 178 de ses jambes 176 dans les fentes 174 de l'organe 132. Cette opération peut être réalisée en positionnant le connecteur au dessus de la découpe 154 et en le déplaçant en direction verticale jusque dans la découpe et jusqu'à ce que ses ergots 178 s'engagent dans les fentes 174 de l'organe 132. En position de montage, le connecteur 124 peut venir en butée sur les faces transversales 155 du corps longitudinal 114 pour limiter leurs déplacements relatifs.

L'étape suivante représentée en figure 9 consiste à insérer l'élément de support 118 dans l'évidement 160 de l'organe de maintien 132 ainsi que dans les encoches des jambes 176 du connecteur 124. Le connecteur 124 est alors retenu sur le corps 116 et l'organe 132 par l'intermédiaire de l'élément de support 118.

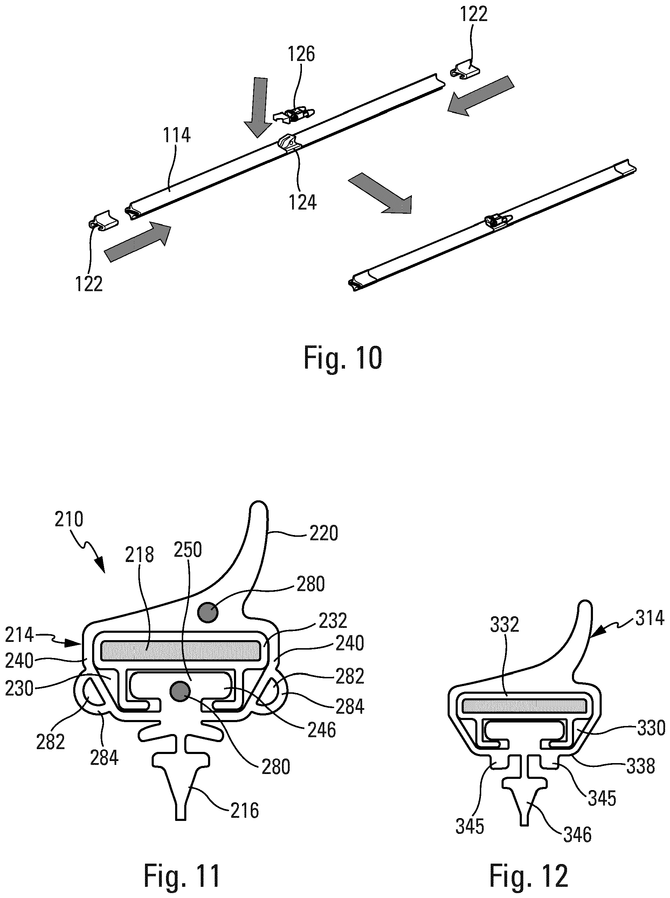

Une étape supplémentaire représentée en figure 10 consiste à monter un embout 122 à chacune des extrémités longitudinales du corps longitudinal 114 pour fermer la cavité 130, et à monter l'adaptateur 126 sur le connecteur 124.

Une dernière étape non représentée peut consister à fixer le balai à un bras porte-balai d'un système d'essuyage d'une vitre de véhicule.

Le balai d'essuie-glace 210 de la variante de réalisation de l'invention représentée en figure 11 diffère du balai 110 décrit dans ce qui précède essentiellement en ce qu'il comprend en outre des éléments longitudinaux 280 de chauffage dans le corps longitudinal 214, ce dernier comprenant en outre des conduits internes 282 de circulation de fluide, tel qu'un liquide lave glace.

Les éléments 280 s'étendent sur sensiblement toute la longueur du corps longitudinal 214. Ils sont ici au nombre de deux et s'étendent respectivement dans la partie inférieure de le déflecteur aérodynamique 220 et dans le talon 246. Chaque élément 280 comprend par exemple un fil chauffant. En variante, l'un seulement des éléments parmi le déflecteur aérodynamique et le talon pourrait comprendre un tel élément de chauffage.

Les conduits internes 282 s'étendent sur sensiblement toute la longueur du corps longitudinal 214 et sont au nombre de deux. Ils s'étendent des deux côtés du balai 210 et sont situés dans un même plan passant sensiblement par la branche horizontale 250 du talon 246 et sensiblement parallèle à celle-ci. Chaque conduit 282 est situé à l'extérieur de la cavité 230 et est défini par des parois 240, 284 formées d'une seule pièce avec le corps longitudinal 214. Plus précisément, chaque conduit 282 est défini par une paroi latérale 240 du corps longitudinal et par une paroi 284 à section de forme sensiblement semi-circulaire dont les bords longitudinaux sont reliés à la paroi latérale 240. Chaque conduit 282 a une forme en section sensiblement semi-circulaire. En variante, elle pourrait être circulaire ou non circulaire (ovale, etc.). Une section circulaire peut faciliter l'obturation étanche des extrémités des conduits au moyen de bouchons cylindriques par exemple.

Les parois 284 comprennent des orifices (non représentés) de pulvérisation de liquide lave glace sur la lame 216 et/ou sur la vitre.

Les conduits 282 sont reliés par des moyens appropriés, par exemple au niveau du connecteur du balai, à des moyens d'alimentation en liquide lave glace.

L'organe de maintien 232 et l'élément de support 220 sont similaires à ceux décrits dans ce qui précède.

La variante de réalisation de la figure 12 diffère du mode de réalisation représenté en figure 2 essentiellement en ce que l'organe d'amortissement 345 est ici intégré à la paroi inférieure 338 du corps longitudinal 314 délimitant la cavité 330 de logement de l'organe 332 de maintien de la lame 316. Cet organe 345 se présente ici sous la forme de deux bourrelets longitudinaux en saillie sur la face inférieure de la paroi 338.

Les figures 13 et 14 représentent d'autres variantes de réalisation de l'invention.

Dans la variante de la figure 13, l'organe de maintien 432 est similaire à celui décrit dans ce qui précède en référence à la figure 6 notamment, et comprend des fentes latérales 474 pour le montage du connecteur 424 qui est également similaire à celui décrit dans ce qui précède. La paroi supérieure 464 de la barre 458 de l'organe de maintien 432 comprend en outre des fentes transversales 490 sensiblement rectilignes, qui permettent d'augmenter la souplesse de l'organe, en particulier en flexion. Le connecteur 424 comprend ici des raccords fluidiques 494 pour l'alimentation en liquide lave glace de conduits internes du corps (non représenté) du balai, du type de ceux décrits dans ce qui précède en référence à la figure 11.

Dans la variante de la figure 14, l'organe de maintien 532 diffère de celui de la figure 13 essentiellement en ce qu'il est allégé de la paroi supérieure de sa barre 558, pour augmenter davantage sa souplesse et diminuer également sa masse. Les fentes latérales 574 définissent entre elles des griffes latérales 592 qui sont destinées à être engagées dans le connecteur 524 et à coopérer avec l'élément de support (non représenté). Ces griffes 592 s'étendent vers le haut depuis la paroi inférieure 562 de la barre 558 de l'organe, et sont formées par découpe des parois latérales 566 de cette barre.

Comme expliqué dans ce qui précède, l'organe 432, 532 des figures 13 et 14 peut comprendre qu'une seule fente 474, 574 sur chacun de ses côtés. L'organe de la figure 14 ne comporterait alors pas de griffes 592. Les connecteurs 424, 524 seraient alors conformés pour coopérer avec ces fentes.

Dans encore une autre variante non représentée, le connecteur 424 de la figure 13 pourrait équiper l'organe de maintien 532 de la figure 14, ou celui 524 de la figure 14 pourrait équiper l'organe de maintien 432 de la figure 13.

## Revendications

1. Balai d'essuie-glace (110) pour un système d'essuyage d'une vitre de véhicule, en particulier automobile, comprenant un corps longitudinal (114) et une lame d'essuyage (116) formés d'une seule pièce, ladite pièce comprenant une cavité (130) de réception d'un élément de support allongé élastique en forme de bande (118), **caractérisé en ce que** ledit élément de support (118) est logé dans un évidement (160) d'un organe longitudinal (132) de maintien de la lame d'essuyage (116), ledit organe de maintien étant logé dans ladite cavité (130), et **en ce que** l'organe de maintien (132), l'élément de support (118) et le corps longitudinal (114) ont sensiblement la même longueur.

2. Balai (110) selon la revendication 1, dans lequel ledit corps longitudinal (114) comprend ladite cavité (130).

3. Balai (110) selon la revendication 1 ou 2, dans lequel le corps longitudinal (114) est formé d'une seule pièce avec un déflecteur aérodynamique (120).

4. Balai (110) selon l'une des revendications 1 à 3, dans lequel ladite cavité (130) est configurée pour recevoir l'organe de maintien (132) par coulissement longitudinal.

5. Balai (110) selon l'une des revendications précédentes, dans lequel ledit évidement (160) est configuré pour recevoir ledit élément de support (118) par coulissement longitudinal.

6. Balai (110) selon l'une des revendications précédentes, dans lequel la lame d'essuyage (116) comprend un talon longitudinal (146) qui s'étend dans ladite cavité (130), et qui a par exemple en section une forme sensiblement en T.

7. Balai (110) selon la revendication 6, dans lequel l'organe de maintien (132) comprend un logement de réception dudit talon (146).

8. Balai (110) selon la revendication 7, dans lequel ledit logement est défini par deux crochets latéraux longitudinaux (170) de l'organe de maintien (132), ces crochets ayant par exemple en section une forme sensiblement en L.

9. Balai (110) selon l'une des revendications 6 à 8, dans lequel ledit élément de support (118) s'étend au-dessus dudit talon (146).

10. Balai (210) selon l'une des revendications précédentes, **caractérisé en ce qu'**il comprend au moins un élément longitudinal (280) de chauffage dans le corps longitudinal (214).

11. Balai (210) selon l'une des revendications précédentes, dans lequel le corps longitudinal (214) comprend au moins un conduit interne (282) de circulation de fluide, tel qu'un liquide lave glace.

12. Balai (110) selon l'une des revendications précédentes, **caractérisé en ce qu'**il comprend un connecteur (124) de liaison à un bras porte-balai, ledit connecteur (124) étant monté dans une découpe (154) médiane du corps longitudinal (114) et traversé par l'élément de support (118) qui assure la retenue du connecteur (124) vis-à-vis du corps longitudinal (114) et de l'organe de maintien (132).

13. Balai (110) selon la revendication 12, dans lequel l'organe de maintien (132) comprend des fentes (174) débouchant dans ladite cavité (130) et dans lesquelles sont engagées des parties (178) du connecteur (124), lesdites parties (178) comprenant des encoches de réception dudit élément de support (118), en particulier par coulissement longitudinal.

14. Système d'essuyage d'une vitre de véhicule, en particulier automobile, comprenant au moins un balai (110) selon l'une des revendications précédentes.

15. Procédé d'assemblage d'un balai d'essuie-glace (110) pour un système d'essuyage d'une vitre de véhicule, en particulier automobile, ce balai comprenant un corps longitudinal (114) et une lame d'essuyage (116) formés d'une seule pièce, ladite pièce comprenant une cavité (130) de réception d'un élément de support allongé élastique en forme de bande (118), **caractérisé en ce qu'**il comprend les étapes consistant à :
a) insérer par coulissement un organe longitudinal (132) de maintien de la lame d'essuyage (116), dans la cavité (130) du corps longitudinal (114), et
b) insérer ledit élément de support (118) dans un évidement (160) dudit organe de maintien (132) et **en ce que** l'organe de maintien (132), l'élément de support (118) et le corps longitudinal (114) ont sensiblement la même longueur.

16. Procédé selon la revendication 15, **caractérisé en ce qu'**il comprend une ou plusieurs des étapes suivantes :
- entre les étapes a) et b), une étape c) consistant à monter un connecteur (124) de liaison à un bras porte-balai, dans une découpe médiane (154) du corps longitudinal (114), ce connecteur (124) étant destiné à être traversé par ledit élément de support (118) lors de l'étape b), ou, après l'étape b), une étape c) consistant à monter un connecteur de liaison (124) à un bras porte-balai, dans une découpe médiane (154) du corps longitudinal (114), ledit connecteur (124) étant formé d'au moins deux parties qui sont assemblées et montées sur l'organe de maintien (132) et ledit élément de support (118),
- avant l'étape a), une étape d) consistant à réaliser ladite découpe médiane (154) du corps longitudinal (114),
- avant l'étape d), une étape consistant à réaliser le corps longitudinal (114) par extrusion, au moins un élément longitudinal (280) de chauffage étant éventuellement co-extrudé avec le corps longitudinal (114),
- après l'étape b), une étape de montage d'embouts d'extremités (122) aux extrémités longitudinales du corps longitudinal (114),
- après l'étape b), une étape de montage d'un adaptateur (126) sur le connecteur (124),
- une étape d'insertion d'au moins un élément longitudinal (280) de chauffage dans au moins un canal longitudinal du corps (114), et
- une étape de raccordement d'au moins un conduit interne (282) de circulation de fluide du corps longitudinal (114), à des moyens d'alimentation en fluide.

## Patentansprüche

1. Scheibenwischerblatt (110) für ein System zum Wischen einer Scheibe eines Fahrzeugs, insbesondere eines Kraftfahrzeugs, das einen Längskörper (114) und ein Wischergummi (116) aufweist, die aus einem einzigen Teil gebildet sind, wobei das Teil einen Hohlraum (130) zum Aufnehmen eines langgestreckten elastischen Stützelements (118) in Form eines Streifens aufweist, **dadurch gekennzeichnet, dass** das Stützelement (118) in einer Aussparung (160) eines Längsorgans (132) zum Halten des Wischergummis (116) untergebracht ist, wobei das Halteorgan in dem Hohlraum (130) untergebracht ist, und dass das Halteorgan (132), das Stützelement (118) und der Längskörper (114) im Wesentlichen dieselbe Länge haben.

2. Wischerblatt (110) nach Anspruch 1, wobei der Längskörper (114) den Hohlraum (130) aufweist.

3. Wischerblatt (110) nach Anspruch 1 oder 2, wobei der Längskörper (114) mit einem aerodynamischen Deflektor (120) aus einem einzigen Teil gebildet ist.

4. Wischerblatt (110) nach einem der Ansprüche 1 bis 3, wobei der Hohlraum (130) ausgebildet ist, um das Halteorgan (132) durch Einschieben in Längsrichtung aufzunehmen.

5. Wischerblatt (110) nach einem der vorhergehenden Ansprüche, wobei die Aussparung (160) ausgebildet ist, um das Stützelement (118) durch Einschieben in Längsrichtung aufzunehmen.

6. Wischerblatt (110) nach einem der vorhergehenden Ansprüche, wobei das Wischergummi (116) eine Längswulst (146) aufweist, die sich in dem Hohlraum (130) erstreckt und die beispielsweise im Querschnitt eine Form aufweist, die im Wesentlichen einem T entspricht.

7. Wischerblatt (110) nach Anspruch 6, wobei das Halteorgan (132) ein Gehäuse zum Aufnehmen der Wulst (146) aufweist.

8. Wischerblatt (110) nach Anspruch 7, wobei das Gehäuse durch zwei seitliche Längshaken (170) des Halteorgans (132) definiert ist, wobei diese Haken beispielsweise im Querschnitt eine Form aufweisen, die im Wesentlichen einem L entspricht.

9. Wischerblatt (110) nach einem der Ansprüche 6 bis 8, wobei sich das Stützelement (118) oberhalb der Wulst (146) erstreckt.

10. Wischerblatt (210) nach einem der vorhergehenden Ansprüche, **dadurch gekennzeichnet, dass** es mindestens ein Längsheizelement (280) in dem Längskörper (214) aufweist.

11. Wischerblatt (210) nach einem der vorhergehenden Ansprüche, wobei der Längskörper (214) mindestens eine innere Leitung (282) für zirkulierende Flüssigkeit, wie beispielsweise eine Scheibenwaschflüssigkeit, aufweist.

12. Wischerblatt (110) nach einem der vorhergehenden Ansprüche, **dadurch gekennzeichnet, dass** es einen Verbinder (124) zum Verbinden mit einem Scheibenwischerarm aufweist, wobei der Verbinder (124) in einem Ausschnitt (154) in der Mitte des Längskörpers (114) montiert ist und von dem Stützelement (118) durchquert wird, das das Festhalten des Verbinders (124) in Bezug auf den Längskörper (114) und das Halteorgan (132) sicherstellt.

13. Wischerblatt (110) nach Anspruch 12, wobei das Halteorgan (132) Schlitze (174) aufweist, die in den Hohlraum (130) münden, und in die die Teile (178) des Verbinders (124) eingreifen, wobei die Teile (178) Kerben zum Aufnehmen des Stützelements (118) aufweisen, insbesondere durch Einschieben in Längsrichtung.

14. System zum Wischen einer Fahrzeugscheibe, insbesondere eines Kraftfahrzeugs, das mindestens ein Wischerblatt (110) nach einem der vorhergehenden Ansprüche aufweist.

15. Verfahren zum Zusammenbau eines Scheibenwischerblatts (110) für ein System zum Wischen einer Scheibe eines Fahrzeugs, insbesondere eines Kraftfahrzeugs, wobei dieses Wischerblatt einen Längskörper (114) und ein Wischergummi (116) aufweist, die aus einem einzigen Teil gebildet sind, wobei das Teil einen Hohlraum (130) zum Aufnehmen eines langgestreckten elastischen Stützelements (118) in Form eines Bandes aufweist, **dadurch gekennzeichnet, dass** es die folgenden Schritte aufweist:
a) Einsetzen durch Schieben eines Längsorgans (132) zum Halten des Wischergummis (116) in den Hohlraum (130) des Längskörpers (114) und
b) Einsetzen (118) des Stützelements in eine Aussparung (160) des Halteorgans (132), sodass das Halteorgan (132), das Stützelement (118) und der Längskörper (114) im Wesentlichen dieselbe Länge haben.

16. Verfahren nach Anspruch 15, **dadurch gekennzeichnet, dass** es einen oder mehrere der folgenden Schritte aufweist:
- zwischen den Schritten a) und b) einen Schritt c), der darin besteht, einen Verbinder (124) zum Verbinden mit einem Scheibenwischerarm in einem Ausschnitt (154) in der Mitte des Längskörpers (114) zu montieren, wobei der Verbinder (124) dazu dient, während des Schritts b) von dem Stützelement (118) durchquert zu werden, oder nach dem Schritt b) einen Schritt c), der daraus besteht, einen Verbinder (124) zum Verbinden mit einem Scheibenwischerarm in einem Ausschnitt (154) in der Mitte des Längskörpers (114) zu montieren, wobei der Verbinder (124) aus mindestens zwei Teilen gebildet wird, die auf dem Halteorgan (132) und dem Stützelement (118) zusammengefügt und montiert sind,
- vor dem Schritt a) einen Schritt d), der daraus besteht, den Ausschnitt (154) in der Mitte des Längskörpers (114) zu realisieren,
- vor dem Schritt d) einen Schritt, der daraus besteht, den Längskörper (114) durch Extrudieren herzustellen, wobei mindestens ein Längsheizelement (280) eventuell zusammen mit dem Längskörper (114) extrudiert wird,
- nach dem Schritt b) einen Schritt zum Montieren von Endkappen (122) an die Längsenden des Längskörpers (114),
- nach dem Schritt b) einen Schritt zum Montieren eines Adapters (126) an den Verbinder (124),
- einen Schritt zum Einsetzen von mindestens einem Längsheizelement (280) in mindestens einen Längskanal des Körpers (114) und
- einen Schritt zum Verbinden von mindestens einer inneren Leitung (282) für zirkulierende Flüssigkeit des Längskörpers (114) mit Mitteln zur Versorgung mit Flüssigkeit.

## Claims

1. Windscreen wiper (110) for a windscreen-wiping system of a vehicle, in particular a motor vehicle, comprising a longitudinal body (114) and a wiper blade (116) formed in a single piece, said piece comprising a cavity (130) for receiving an elastic elongate support element in strip form (118), **characterized in that** said support element (118) is housed in a recess (160) of a longitudinal member (132) holding the wiper blade (116), said holding member being housed in said cavity (130), and **in that** the holding member (132), the support element (118) and the longitudinal body (114) have substantially the same length.

2. Wiper (110) according to Claim 1, wherein said longitudinal body (114) comprises said cavity (130).

3. Wiper (110) according to Claim 1 or 2, wherein the longitudinal body (114) is formed in a single piece with an aerodynamic deflector (120).

4. Wiper (110) according to one of Claims 1 to 3, wherein said cavity (130) is configured to receive the holding member (132) by longitudinal sliding.

5. Wiper (110) according to one of the preceding claims, wherein said recess (160) is configured to receive said support element (118) by longitudinal sliding.

6. Wiper (110) according to one of the preceding claims, wherein the wiper blade (116) comprises a longitudinal heel (146) which extends into said cavity (130), and which, for example, has a substantially T-shaped cross section.

7. Wiper (110) according to Claim 6, wherein the holding member (132) comprises a housing for receiving said heel (146).

8. Wiper (110) according to Claim 7, wherein said housing is defined by two lateral longitudinal hooks (170) of the holding member (132), these hooks having, for example, a substantially L-shape in cross section.

9. Wiper (110) according to one of Claims 6 to 8, wherein said support element (118) extends above said heel (146).

10. Wiper (210) according to one of the preceding claims, **characterized in that** it comprises a longitudinal heating element (280) in the longitudinal body (214).

11. Wiper (210) according to one of the preceding claims, wherein the longitudinal body (214) comprises at least one internal duct (282) for fluid circulation, such as a screen wash liquid.

12. Wiper (110) according to one of the preceding claims, **characterized in that** it comprises a link connector (124) to a wiper-holding arm, said connector (124) being mounted in a median cutout (154) of the longitudinal body (114) and passed through by the support element (118) which ensures the retention of the connector (124) with respect to the longitudinal body (114) and the holding member (132).

13. Wiper (110) according to Claim 12, wherein the holding member (132) comprises slits (174) emerging in said cavity (130) and in which parts (178) of the connector (124) are engaged, said parts (178) comprising notches for receiving said support element (118), in particular by longitudinal sliding.

14. Windscreen-wiping system a vehicle, in particular a motor vehicle, comprising a wiper (110) according to one of the preceding claims.

15. Method for assembling a windscreen wiper (110) for a windscreen-wiping system of a vehicle, in particular a motor vehicle, this wiper comprising a longitudinal body (114) and a wiper blade (116) formed in a single piece, said piece comprising a cavity (130) for receiving an elastic elongate support element in strip form (118), **characterized in that** it comprises the steps of:
a) inserting, by sliding, a longitudinal member (132) holding the wiper blade (116) into the cavity (130) of the longitudinal body (114), and
b) inserting said support element (118) into a recess (160) of said holding member (132) and **in that** the holding member (132), the support element (118) and the longitudinal body (114) have substantially the same length.

16. Method according to Claim 15, **characterized in that** it comprises one or more of the following steps:
- between the steps a) and b), a step c) consisting in mounting a link connector (124) to a wiper-holding arm, in a median cutout (154) of the longitudinal body (114), this connector (124) being intended to be passed through by said support element (118) in the step b), or, after the step b), a step c) consisting in mounting a link connector (124) to a wiper-holding arm, in a median cutout (154) of the longitudinal body (114), said connector (124) being formed in at least two parts which are assembled and mounted on the holding member (132) and said support element (118),
- before the step a), a step d) consisting in producing said median cutout (154) of the longitudinal body (114),
- before the step d), a step consisting in producing the longitudinal body (114) by extrusion, at least one longitudinal heating element (280) being possibly co-extruded with the longitudinal body (114),
- after the step b), a step of mounting end fittings (122) at the longitudinal ends of the longitudinal body (114),
- after the step b), a step of mounting an adaptor (126) on the connector (124),
- a step of insertion of at least one longitudinal heating element (280) in at least one longitudinal channel of the body (114), and
- a step of connecting at least one internal fluid circulation duct (282) of the longitudinal body (114) to fluid supply means.
